# EUROPEAN PATENT SPECIFICATION

(11) **EP 3 944 737 B1**
(45) Date of publication and mention of the grant of the patent: **23.11.2022**
(21) Application number: 20704585.7
(22) Date of filing: 23.01.2020
(51) Int. Cl.: B60N 2/80

(54) **A VEHICLE SEAT**
FAHRZEUGSITZ
SIÈGE DE VÉHICULE

(30) Priority: 02.04.2019 IT 201900004899
(43) Date of publication of application: 02.02.2022
(73) Proprietor: Gestind S.p.A., 10050 Bruzolo (Torino) (IT)
(72) Inventor: RAVICINO, Marco, 27038 Robbio (Pavia) (IT); RAVICINO, Roberto, 13100 Vercelli (IT); GILARDI, Massimo, 27038 Robbio (Pavia) (IT)
(74) Representative: Lunati & Mazzoni S.r.L.
(86) International application number: PCT/IB2020/050525
(87) International publication number: WO 2020/201842

(56) References cited:
- US-A1- 2009 315 372
- US-A1- 2017 327 620

## Description

The present invention relates to a vehicle seat of the type specified in the preamble of the first claim.

In particular, the invention relates to a seat with a headrest designed to be installed integrally to, or in connection with, the seat itself and for any vehicle that may subject the head of a user, for example, by inertia, to sudden accelerations.

A seat according to the preamble of claim 1 is disclosed in patent application US 2009/315372 A1.

As is well known, the headrests for ordinary vehicle seats are arranged at the top of the seats themselves and can be integrated into the seat or removably attached to the seat itself.

They may, therefore, be made of material that is identical or similar to the material of the seat, or they may differ from it both in terms of structure and stuffing.

Normally, headrests for motor vehicles comprise a structural core, e.g. made of metallic material, primarily designed to enable restraint on a seat. This core is, in addition, surrounded by a stuffing that can have different degrees of stiffness depending on the softness that the headrest is supposed to have.

One of the most important aspects defining a headrest is, without doubt, the safety it demonstrates in terms of reactivity in the case of impulsive accelerations on the user's head due, for example, to sudden impacts.

Reactivity is usually detected through tests to verify the behaviour of the whole seat, of which the headrest is a part, when whiplash occurs, also known as whiplash tests. The test enables the user to dynamically test the seat of a car and, therefore, also the headrest to evaluate the extent to which they react in order to evaluate its prevention of soft tissue neck injury. The procedure for carrying out common whiplash tests involves arranging a dummy in a position suitable for a user seated on the seat and then stimulating the seat with impulsive forces of different intensity and oriented parallel to the ground.

In order to pass the requirements of this test, ordinary headrests shall comply with the requirements concerning, for example, time of contact and energy absorption by the headrest, which can be evaluated in terms of relative decelerations of the dummy's head.

During the preparation of the whiplash test, if the headrest core is attached to the seat by mechanisms allowing the headrest support surface to move forward or backward in relation to the back rest, the headrest shall be arranged in a predetermined position, usually halfway up the allowed travel.

In this way, the times of contact are evaluated on the basis of the user's neck's range of motion in relation to the position assumed by the headrest in relation to the back rest.

In addition, another important aspect for headrests is the comfort of the support surface.

The surface comfort of the headrests is, usually, determined by the material that makes up the stuffing and the cover and, therefore, depends almost exclusively on these. Normally, the headrest support surface is rather rigid and mainly enables the head to rest on the support surface without letting the head to sink into it. The stuffing is preferably made in such a way as to have minor deformations so as to ensure the structural strength of the headrest.

The described prior art comprises some significant drawbacks.

In particular, as described, in order to meet the requirements deriving from the whiplash test, the support surface of the headrest must ensure times of contact and decelerations within predetermined threshold values, at least during the impact phase. Therefore, either the intermediate position of the headrest in relation to the back rest - defined, for example, by the mechanisms described above - must be rather forward, or the headrest must be constructed in such a way that the support surface is always in a forward position in relation to the back rest.

However, the latter configuration comprises the significant drawback of having to be both compliant with the material's impact reactivity specifications and sufficiently comfortable for the user's head. In fact, if the support surface is forward, any stuffing that is too rigid may cause the user to maintain the wrong posture with the neck inclined forward, resulting in physical problems, or may, in any case, be uncomfortable when the user's head rests on the headrest.

In this context, the technical task underlying the present invention is to devise a vehicle seat capable of substantially overcoming at least some of the above-mentioned drawbacks.

In the context of said technical task, one important purpose of the invention is to obtain a vehicle seat that meets the requirements of the whiplash test by eliminating or reducing the need for specific handling mechanisms with forward intermediate positions.

In this respect, a related purpose of the invention is to provide a seat wherein the headrest is, in any case, sufficiently safe and reactive during impact absorption.

Another important purpose of the invention is to provide a seat wherein the headrest, together with excellent reactivity, maintains high levels of comfort for the user's head, ensuring, in addition, that the user does not perceive discomfort or unpleasant sensations when the head is resting on the contact surface of the headrest.

The technical task and specified purposes are achieved with a vehicle seat as claimed in the appended claim 1.

Preferred embodiments are described in the dependent claims.

The characteristics and benefits of the invention will be clarified in the following detailed description of some preferred embodiments of the invention, with reference to the accompanying drawings, wherein:

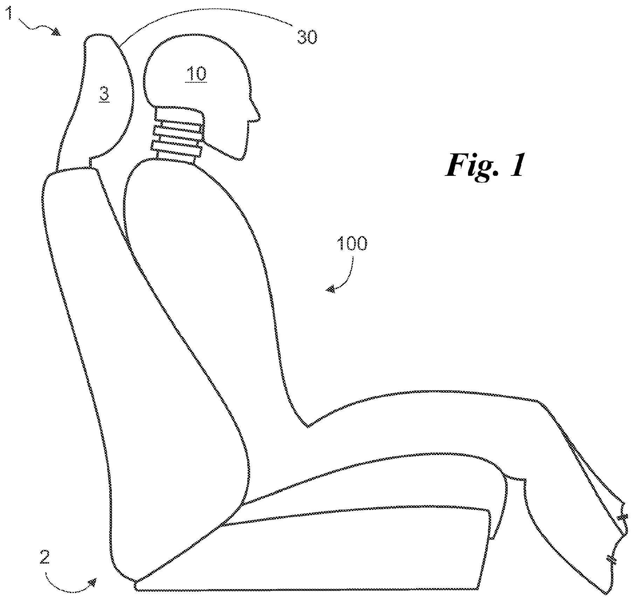

**Fig. 1** shows a side view of a dummy in a sitting position on a vehicle seat according to the invention e.g. configured for the whiplash test;
**Fig. 2** shows a graph representing the squashing (A) and release (B) curve of the viscoelastic foam material on a vehicle seat headrest according to the invention wherein the percentage squashing is indicated in abscissa and the forces, both on the left in Newton [N] and on the right in pounds [lb], are indicated in ordinate;
**Fig. 3a** is a front view of the headrest of a vehicle seat according to the invention in a preferred embodiment wherein the cushion body forms the contact surface;
**Fig. 3b** represents a side section view of the headrest of a vehicle seat according to the invention in the preferred embodiment that comprises an additional interface layer;
**Fig. 4** shows a side section view of the headrest of a vehicle seat according to the invention in an alternative embodiment that comprises a cover;
**Fig. 5** shows a side section view of the headrest of a vehicle seat according to the invention in an alternative embodiment wherein the cushion body is included in the cover and the cover defines the contact surface;
**Fig. 6** is a side section view of the headrest of a vehicle seat according to the invention in an alternative embodiment wherein the cushion body is included in the support portion and the latter defines the contact surface;
**Fig. 7** is an example of a summary table of the values detected during the whiplash tests, carried out, in this case, by Euro NCAP, with low, medium, and high severity impulsive accelerations; in particular, the table includes the times of contact values (T-HRC);
**Fig. 8a** shows an example of a graph showing the threshold values of impulsive accelerations, in ordinate, in relation to the time, in abscissa, to which a seat is subjected during whiplash tests with medium severity impulses;
**Fig. 8b** shows a summary table that includes the specific values of some points present in the graph of Fig. 8a; and

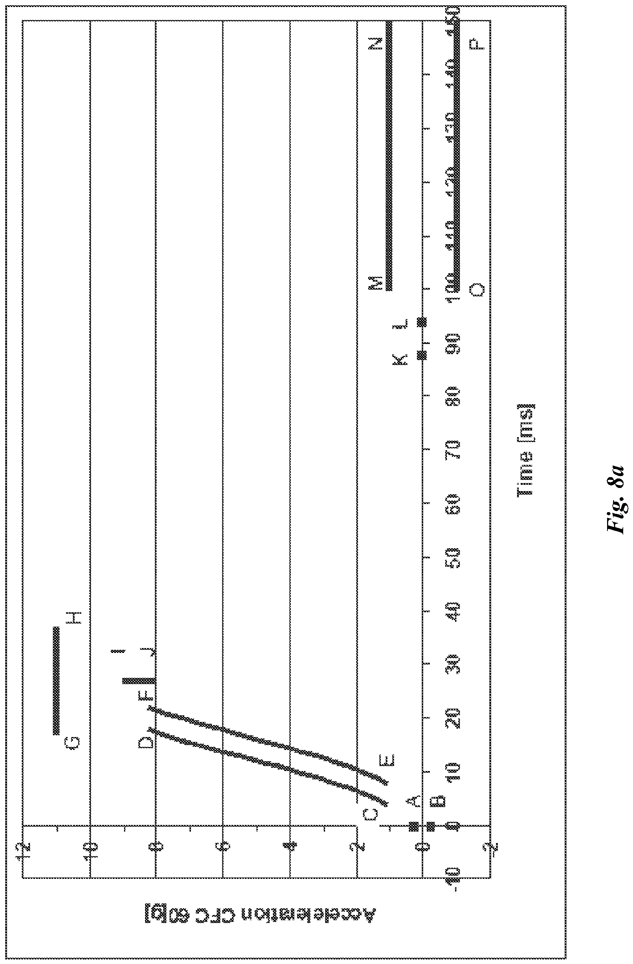

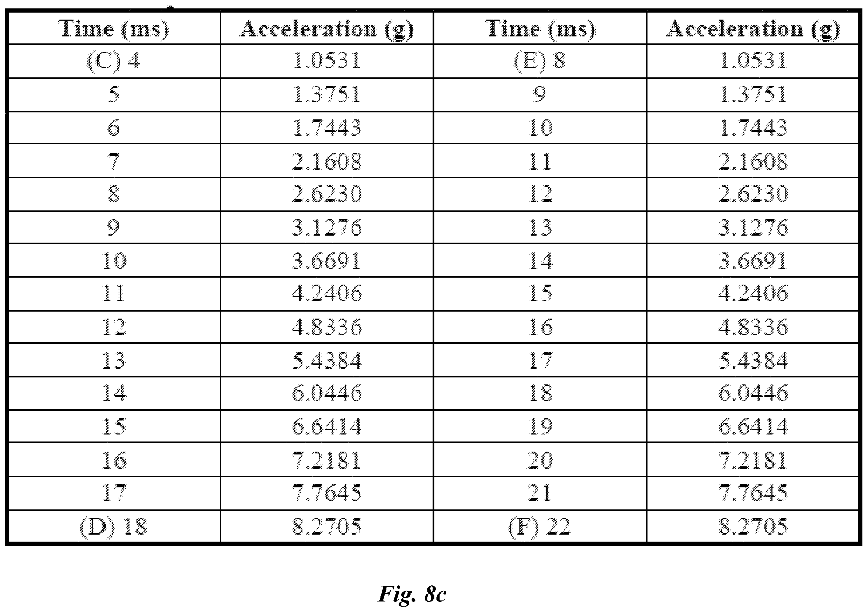

**Fig. 8c** is a table that summarises the specific values of the corridor wherein the acceleration undergoes the maximum increase present in the graph in Fig. 8a. In the present document, the measures, values, shapes, and geometric references (such as perpendicularity and parallelism), when associated with words like "almost" or other similar terms, such as "approximately" or "substantially", are to be understood as except for measurement errors or inaccuracies owing to production and/or manufacturing errors and, above all, except for a slight divergence from the value, measure, shape, or geometric reference with which it is associated. For example, if such terms are associated with a value, they preferably indicate a divergence of no more than 10% of the same value.

Furthermore, when used, terms, such as "first", "second", "higher", "lower", "main" and "secondary" do not necessarily identify an order, relationship priority, or relative position, but they can simply be used to distinguish different components more clearly from one another.

Unless otherwise stated, the measurements and data reported in this text shall be considered as performed in International Standard Atmosphere ICAO (ISO 2533:1975).

With reference to the figures, the reference numeral **1** globally denotes the vehicle seat according to the invention.

The seat 1 is preferably a seat for a car-type vehicle, i.e. a motor vehicle. However, the seat 1 could also be used in different fields, such as aviation or navigation and could, therefore, also be installed and form part of means of transport means such as aircraft or boats.

The seat 1 is preferably designed to support or sustain a user in a sitting position. Therefore, the seat preferably comprises at least one seat cushion **2.**

The seat cushion 2 is substantially the structure designed to support the weight of the sitting user. Therefore, it shall preferably comprise at least one body present between the bottom of the vehicle and the user's buttocks.

The seat 2, in an extended sense, may also comprise a portion designed to sustain the user's back, i.e. a back rest, which may be integrated with or attached to the body previously described.

The seat 1 also comprises a headrest **3.**

The headrest 3 is attached to the seat cushion 2. It is also, preferably, designed to support the user's head and, in particular, the portion of the head known as the nape.

The headrest 3, as well as the seat cushion 2, is intended to reduce the range of motion of a user's head in the event of a collision and also, in some cases, to support the user's head.

The headrest 3 can, therefore, be integrated into the seat cushion 2 and, therefore, be part of it. Examples of headrests 3 integrated into seat cushions 2 are given by the seats 1 normally used in the field of motor racing.

Alternatively, the headrest 3 may be attached to an upper portion of the seat cushion 2 in such a way as to be arranged at head height in relation to a sitting user.

The restraint may be made by interlocking joints, whether removable or not, and, therefore, the headrest 3 may or may not be removable from the seat cushion 2. The headrest 3 preferably defines a contact surface **30.**

The contact surface 30 is substantially the area of the headrest 3 that is designed to contact the user's head if the head is set back against the headrest 3. Therefore, the contact surface 30 is a portion of the headrest 3, preferably shaped in relation to the user.

More specifically, the headrest 3 preferably comprises a plurality of components. In particular, the headrest 3 preferably comprises at least one support portion **31** and one cushion body **32.**

The support portion 31 is preferably connected to the seat cushion 2. In fact, it is the part of the headrest 3 that is designed to directly come into contact with, or is directly connected to, the seat cushion 2. The support portion 31 may, therefore, include a rigid material, e.g. metal. For example, the support portion 31 may include a core and stuffing.

In this case, the core could be metal, polymeric or composite material, or something else, while the stuffing could comprise any polymeric material, for example expanded polypropylene or expanded polystyrene. Alternatively, the support portion 31 could only comprise stuffing material or even, as mentioned above, be directly integrated into the seat cushion 2, for example in the upper part of the back rest. The support portion 31 preferably includes, at least partially, elastic foam material. The elastic foam material is, for example, polyurethane, polyester, or polyether. The cushion body 32 is, preferably, a part of the headrest 3 with lower stiffness than the support portion 31.

The cushion body is preferably at least partially made of viscoelastic foam material. Appropriately, the cushion body 32 can be made entirely of viscoelastic foam material, preferably memory foam or low resilience foam. These are, therefore, materials that preferably have a slow return to their original shape after an initial deformation. These materials are preferably polyurethanes or other polymers. More preferably, said viscoelastic foam material is pneumatic viscoelastic type. As is well known, in fact, viscoelastic materials, in particular those mentioned above, have two possible forces that influence their return to initial dimensions: forces caused by the molecular structure of the polymers, and forces caused by the structure of the porosity inside the foam material. The behaviour of pneumatic viscoelastic foam materials, particularly when returning to their initial dimensions after compression, is dominated by the forces caused by the structure of the porosity inside the foam material.

The cushion body 32 is basically, preferably a highly deformable portion of the headrest 3 that is designed to absorb the pressures exerted, for example, by a user's head, with variations in its shape. These pressures can be caused by collisions or simple supports, and the pressure can be exerted directly or indirectly on the cushion body 32.

The cushion body 32 can, in fact, be arranged in various positions on the headrest 3. It may be a part arranged inside the support portion 31, and the latter may define the contact surface 30, or it may be arranged between the support portion 31 and the contact surface 30. Or, the headrest 3 may include a cover **34** and the cushion body 32 may be arranged in the cover 34 in such a way that it is substantially sandwiched between the support portion 31 and the user's head.

In this case, the contact surface 30 can also be defined by a portion of the cover 34. The cushion body 32 is, in its preferred embodiment, preferably designed to be subjected to direct pressure from the user's head. Therefore, the cushion body 32 preferably defines the contact surface 30.

Therefore, the contact surface 30 is preferably at least partially made of viscoelastic foam material.

In other words, the contact surface 30 is preferably a part of the cushion body 32 and, more specifically, the part directly exposed to contact with the user's head. Therefore, the cushion body 32 preferably takes the form of the headrest layer 3 in contact or directly facing the user's head.

The term in contact with, or directly facing, the user's head means that the cushion body 32 is preferably arranged in a position where it is directly touching the user's head and, therefore, even if there are covers, the cushion body 32 is considered to be directly in contact with, or under pressure from, the user's head. This is because a simple cover 34 does not add or remove anything from the point of view of absorption, unless the cover 34 itself includes an absorption portion such as, for example, a second cushion body 32.

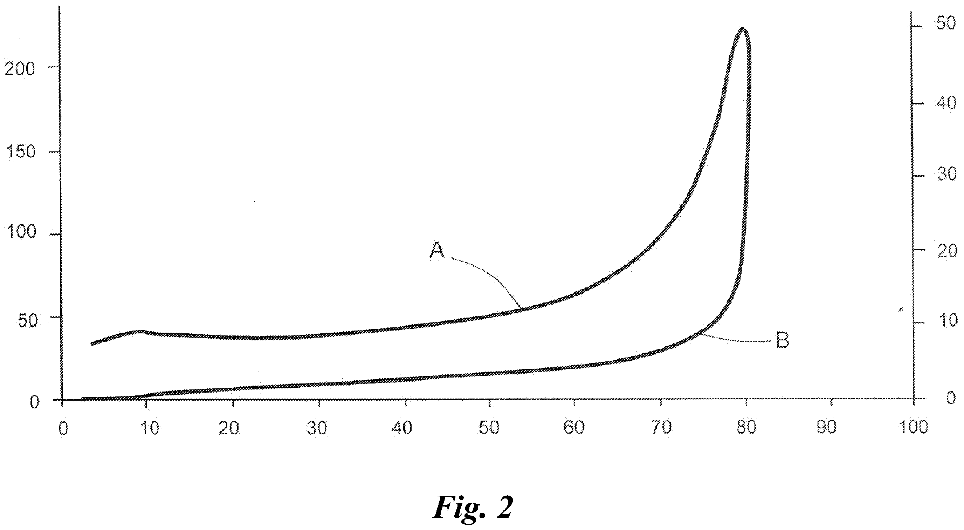

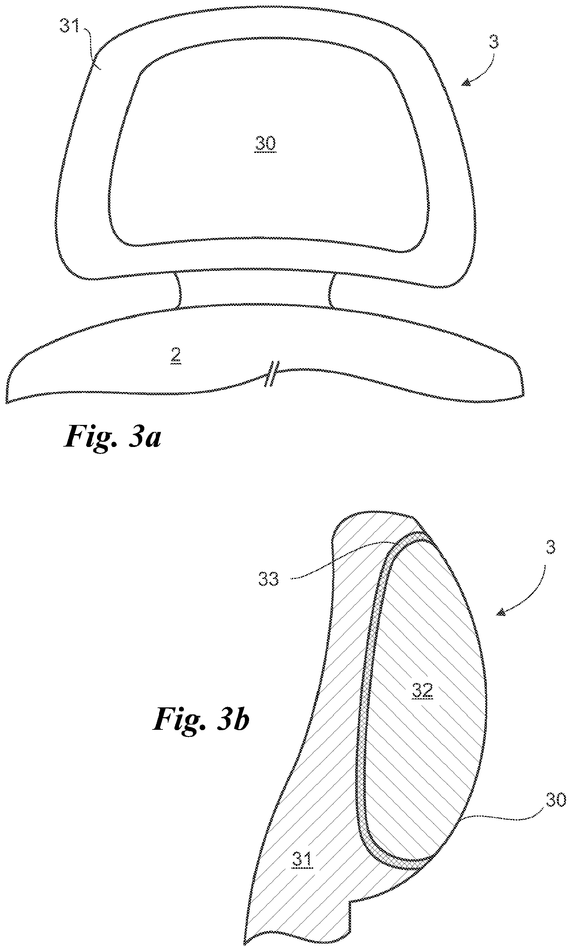

The cushion body 32 is preferably framed within the support portion 31, as shown in Fig. 2-3, so that it is only accessible from the outside at the contact surface 30. The cushion body 32 therefore defines a thickness substantially proportional to the depth reached within the headrest 3. The cushion body 32 preferably has a thickness ranging between 10 and 50 mm.

In addition to what has already been described, the headrest 3 may also comprise an interface layer **33.**

The interface layer 33 is preferably interposed between the support portion 31 and the cushion body 32. In this way it creates a support membrane that is, preferably, more rigid than the cushion body 32.

This interface layer 33 may also be more rigid than at least part, e.g. most, of the support portion 31 so that a headrest 3 stiffening section can be made that is designed to support and sustain the weight of the user's head.

The interface layer 33 can also only include adhesive material designed to hold the support portion 31 and the cushion body 32 together.

In any case, as already mentioned, the contact surface 30 is at least partially, preferably if not totally, made of viscoelastic foam material with defined characteristics.

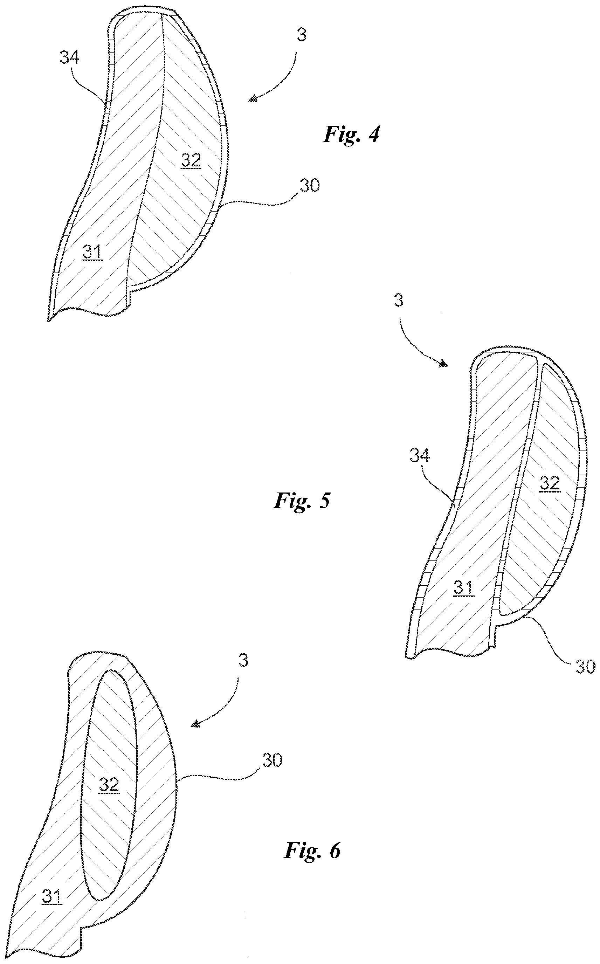

The viscoelastic foam material preferably has the particularity of not reacting to compression with values proportional to squashing, and preferably has a predefined hysteresis area, as can be seen from the graph in Fig. 4, wherein **A** indicates the squashing curve and **B** the release curve. The curves A and B delimit between them the area of hysteresis that represents the energy that the material has not restored during the release phase.

The presence of an area of hysteresis and its extension preferably defines the viscoelastic foam material.

In more detail, the determination of the viscoelastic foam material is carried out considering the damping coefficient ratio or factor defined by the ratio between the hysteresis area and the compression area, i.e. the area below the compression curve A, multiplied by 100. The evaluation of the damping coefficient is carried out using a monolithic quadrangular sample with 100 mm sides and a thickness of 50 mm.

Alternatively, it is possible to use a layered sample by overlapping several pieces of material until the above-mentioned thickness is attained. The sample is squashed by up to 80% of its initial thickness with a squashing speed of 300 mm/min and released non-stop at a speed of 100 mm/min.

Suitable materials for achieving the proposed purpose are, preferably, those having a damping coefficient ratio greater than 50% with a compression energy greater than 50 N mm at a squashing equal to or greater than 80% of the initial thickness of the sample.

More appropriately, a damping coefficient ratio ranging between 50% and 80% may be adopted.

An example of viscoelastic foam material is the mixing of polyols and isocyanate to make polyurethane foam, as specified below.

For example, the viscoelastic foam material may include a first polyol, a second polyol, a third polyol to which additives are added. The first polyol may comprise glycerol, ethoxylate, and propoxylate with a hydroxyl value of 33 mgKOH/g. The second polyol may include a polyether-based reactive polyurethane dispersion with a solid content of about 20% by weight and a hydroxyl value of 28 mgKOH/g. The third polyol may include triol polyether homopolymer, nominal 3000 mw with a hydroxyl value of 56 mgKOH/g.

The additives may include an amine catalyst, one or more silicone stabilizers, and a diphenylmethane-4,4'-diisocyanate (MDI) mixture with isomers and homologues of greater functionality with an NCO content ranging between 20% and 33.5%.

The cushion body 32 that comprises viscoelastic foam material can be made and moulded before coupling with the support portion 31, and then coupled with it via the interface layer 33. Therefore, in this case, the cushion body 32 and the support portion 31 are made and shaped separately and, following this, coupled.

Or, the cushion body 32 can be made, for example, in a preferred configuration wherein the cushion body 32 is framed inside the support portion 31, i.e. within the housing of the support portion 31.

Therefore, the support portion 31 and the cushion body 32 can be substantially co-moulded. Preferably, the support portion 31 and the cushion body 32 are made, preferably first, by forming a layer of viscoelastic material that conveniently has a permeability that varies between 5 and 2000 l/m²-sec and a pressure drop of 50 Pascal, with reference to a sample thickness of 10 mm, and, preferably following this, by introducing an expanding liquid to the viscoelastic layer, preferably in a forming mould (not shown), that, after expansion, defines the viscoelastic foam material layer, i.e. the cushion body 32, and the elastic foam material layer, i.e. the support portion 31.

Alternatively, it is also possible to arrange a layer of viscoelastic material in a mould and insert elastic material while the viscoelastic material is forming inside the mould. Therefore, the injection of the two layers can be substantially simultaneous or very close in time.

During expansion, the expanding liquid incorporates a portion of the foam material layer and helps to create an intermediate layer, arranged between the corresponding viscoelastic foam layer and the elastic foam layer, and consisting partly of viscoelastic and, partly, of elastic foam material.

The interface layer 33 can, therefore, correspond with said intermediate layer and, once expansion is completed, define a support membrane for the weight of the user's head, thus enabling a drastic reduction in the quantity of elastic foam material. In addition, as explained above, the headrest 3 may also include a cover 34 and the support portion 31 and the cushion body 32 may be assembled with each other when the cover fits the support portion 31. In this case, for example, the cushion body 32 may be part of the cover 34 and the support 31 may include a cavity designed to house the cushion body 32 when the cover 34 is fitted to the support portion 31.

In this case, the contact surface 30 is defined by the part of the cover 34 incorporating the cushion body 32.

Or, more trivially, the cushion body 32 of the cover can rest on part of the support portion 31 and protrude towards the user's head.

Various different types of processing can be used for the above-mentioned production with the cover 34.

For example, when the cushion body 32 is inserted inside the cover 34, after it has been formed, it can be joined to the cover 34 by means of glue, or it can be heat-sealed to it, or even electro-welded, or even sewn, or something else. Secondly, the cover 34 can be fitted to the support portion 31, also already formed, so as to define the headrest 3.

Alternatively, it is also possible to use a type of "*in situ*" processing that enables the support portion 31 to be cast inside the cover 34. In this embodiment, a cover 34 can be made and inserted in a mould to which the cushion body 32 can be attached, for example by means of the methods mentioned above, or formed by casting. Subsequently, the elastic material can be cast within the cover 34 in such a way as to make, once expanded, the support portion 31.

Obviously, other types of processing can also be adopted, while remaining within the inventive concept of the present invention.

Preferably, the headrest 3 not only has features that increase the comfort or support of a user's head, but it also has features that, in synergy with the previous ones, enable the production of safe seats.

In order to describe these characteristics, what is known about the seats' whiplash tests is taken into account.

One example of a reliable reference text in this respect is "*The dynamic assessment of car seats for neck injury protection testing protocol", Version 3.1, June 2011, EUROPEAN NEW CAR ASSESSMENT PROGRAMME (Euro NCAP).*

This test defines, as an objective parameter for the evaluation of the results of a seat subjected to a whiplash test, the time of contact with the headrest, also referred to as *Head Restraint Contact Time* (T-HRC).

The time of contact with the headrest is defined as the time taken, following a sudden impact or acceleration of the seat 1, by the head of a dummy to contact the headrest 3 in a stable manner, i.e. substantially for a continuous time of contact of more than 40 ms.

The time of contact is preferably evaluated as the time of contact between the head of the dummy and the contact surface 30.

The time of contact with the headrest is, therefore, dependent on a number of factors: the position of the user's body, translated during the test from the position and the sliding of the dummy on the seat, the speed or acceleration of the impact, the distance and, above all, the orientation of the headrest by the user.

The distance between headrest and user cannot be defined unequivocally, since it depends, for example, on which reference system is used and on the orientation of the headrest 3 in relation to the dummy, and therefore on the conformation of seat 2. Thus, it is essential to use the whiplash test as a universal metric to indirectly define the preferred distance between the headrest 3 of the seat 1 and the user's head.

Preferably, the evaluation of the distance is carried out by taking into account the parameter of the time of contact between the contact surface 30 and the head **10** of a dummy **100.**

The dummy 100 is any humanoid body, preferably meeting the standards required to perform the whiplash test. The same can be said, preferably, for the head 10. Therefore, the reference posture is always given by the posture that the dummy 100 and the head 10 of the dummy 100 must assume in relation to the seat 2, according to the standards stated, for example, in the above-mentioned text.

As already mentioned, the contact surface 30 is substantially the portion of the headrest 3 designed to contact the head of the user, or the dummy, or to be subjected to direct pressure from the head of the user, or the dummy.

Therefore, it may coincide with part of the support portion 31, if the cushion body 32 is incorporated into the support portion 31 and there are no covers in the headrest 3. The contact surface 30 may alternatively coincide with a part of the cushion body 32 if the latter is arranged between the support portion 31 and the user's head and there are no covers, or the intended cover 34 is basically negligible in thickness. The contact surface 30 may, alternatively, be part of the cover 34 if it is arranged between the support portion 31, or the cushion body 32, and defines non-negligible thicknesses, or if the cover 34 includes a cushion body 32.

Conveniently, the headrest 3 and the seat cushion 2 are attached to each other in such a way that the contact surface 30 is configured to achieve times of contact with the head of the dummy of less than 150 ms, for example during a whiplash test in which the seat 1 on which the dummy 100 is arranged is subjected to impulsive accelerations of medium severity (known as Medium Severity Sled Pulse).

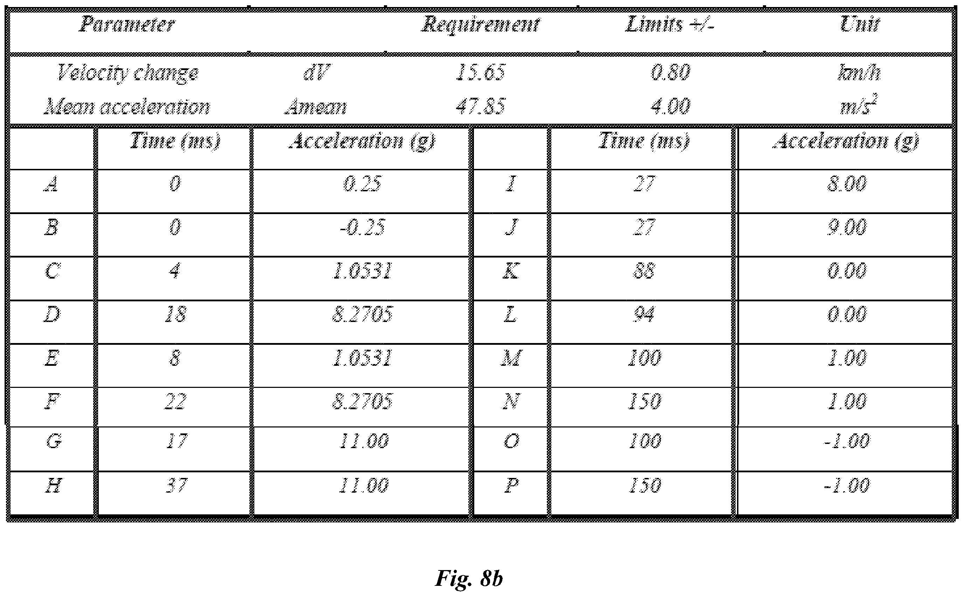

An example of the impulsive accelerations involved in medium severity tests is shown in the graph in Fig. 8a. In addition, the acceleration values are further detailed, in relation to time, during a whiplash test in Figs. 8b-8c.

In particular, the times of contact preferably range between 45 ms and 115 ms. More appropriately, the times of contact range between 53 and 95 ms.

Preferably, these times of contact intervals are also valid if the seat 1 on which the dummy 1 is arranged is subjected to accelerations of low severity (Low Severity Sled Pulse) and high severity (High Severity Sled Pulse).

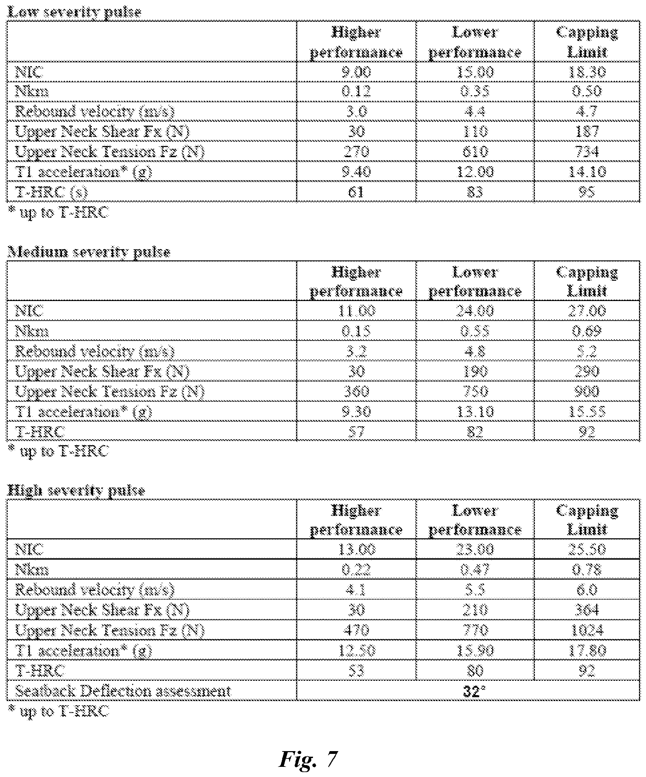

Examples of times of contact measured during Euro NCAP tests are given in the table in Fig. 7.

The impulsive accelerations refer to the seat 1 that is subjected to impulsive accelerations; however, the dummy 100 and, in particular, the head 10 of the dummy 100 is, of course, subjected to substantially equal and opposite accelerations.

In the evaluation of times of contact, therefore, the evaluation methods in the whiplash tests adopted by Euro NCAP were considered. Obviously, in order to detect the times of contact, the whiplash tests carried out according to the methodologies of other bodies, such as IIHS (Insurance Institute for Highway Safety) and HLDI (Highway Loss Data Institute), could also be taken into consideration.

The time of contact can then be converted into a distance, taking into account the acceleration achieved in the test. Obviously, this distance corresponds to the distance evaluated along the motion trajectory of the head of the dummy in relation to the headrest 3, in particular the contact surface 30, and can, for example, be obtained indirectly by means of the known time law of motion.

In addition, preferably, e.g. in machines with a conventional seat cushion, the minimum distance between the contact surface 30 and the head 10 of the dummy 100 is less than 165 mm.

The vehicle seat 1 according to the invention achieves significant advantages.

In fact, the combination of the material of the contact surface 30 of the headrest 3 and the advancement of the headrest 3, universally defined by means of the time of contact between headrest 3 and head 10 of the dummy 100, enables the production of a seat 1 capable of meeting the requirements of the whiplash test. This is achieved by eliminating the need for specific handling mechanisms for the advancement of the headrest support surface.

At the same time, the seat 1 maintains high levels of comfort for the user's head, allowing, furthermore, the user to avoid any discomfort or unpleasant sensations when the head is resting on the headrest 3.

The position of the contact surface 30 and the material of the cushion body 32, which can make the contact surface 30 itself, enable the production of a seat wherein the headrest 3 is sufficiently reactive even if, overall, it does not occupy an intermediate position forward of the back rest.

Therefore, the headrest 3 of the seat 1 is less bulky and more efficient.

The provision of a cushion body 32 including a layer of viscoelastic material and, therefore, able to react to the pressure exerted by the user with values not proportional to the squashing enables the cushion body 32 to adapt, from time to time, to the shape of the user's head evenly distributing the reaction loads.

In addition, especially when using cushion bodies 32 including pneumatic viscoelastic type material, the behaviour of the cushion body 32 remains constant with the temperature and, therefore, the headrest 3 has a reduced, if not absent, sensitivity to heat.

The invention is subject to variations falling within the scope of the inventive concept defined by the claims.

In such scope, all details can be replaced by equivalent elements and any materials, shapes and sizes can be used.

## Claims

1. A vehicle seat (1) comprising
- a seat cushion (2),
- a headrest (3) constrained to said seat cushion (2), defining a contact surface (30) and including a cushion body (32) at least partially made of a viscoelastic foam material,
and **characterised in that**
- said viscoelastic foam material has a damping coefficient ratio greater than 50% with a compression energy greater than 50 N·mm at a squashing equal to or greater than 80% of the initial thickness.

2. The seat (1) according to at least one preceding claim, wherein said viscoelastic foam material is of the pneumatic viscoelastic type.

3. The seat (1) according to at least one of the preceding claims, wherein said headrest (3) and said seat cushion (2) are constrained to each other so that said contact surface (30) is configured to provide times of contact with said head (10) of said dummy (100) shorter than 150 ms during a whiplash test in which said seat (1), on which a dummy (100) defining a head (10) is arranged, is subjected to impulsive accelerations of average severity.

4. The seat (1) according to at least one of the preceding claims, wherein said contact time ranges from 45 ms to 115 ms.

5. The seat (1) according to the preceding claim, wherein said contact time ranges from 53 ms to 95 ms.

6. The seat (1) according to at least one of the preceding claims, wherein said viscoelastic foam material has a damping coefficient ratio ranging between 50% and 80%.

7. The seat (1) according to at least one of the preceding claims, wherein said headrest (3) includes at least one support portion (31) connected to said seat cushion (2) and at least partially including elastic foam material, and said cushion body (32) is arranged between said support portion (31) and said contact surface (30).

8. The seat (1) according to at least one of the preceding claims, wherein said cushion body (32) defines said contact surface (30) and is framed within said support portion (31) so as to be accessible from the outside exclusively at said contact surface (30).

9. The seat (1) according to at least one of the preceding claims, wherein said headrest (3) includes a cover (34) including said cushion body (32) and defining said contact surface (30).

10. The seat (1) according to at least one of the preceding claims, wherein said cushion body (32) is incorporated within said support portion (31), and said support portion (31) defines said contact surface (30).

11. The seat (1) according to at least one of the preceding claims, wherein said cushion body (32) has a thickness ranging between 10 and 50 mm.

## Patentansprüche

1. Fahrzeugsitz (1) der Folgendes umfasst
- eine Sitzfläche (2)
- eine Kopfstütze (3), die mit der genannten Sitzfläche (2) verbunden ist, welche eine Kontaktfläche (30) definiert und einen Kissenaufbau (32) enthält, der mindestens teilweise aus viskoelastischem Schaumstoff hergestellt ist,
und **dadurch gekennzeichnet ist, dass**
- der genannte viskoelastische Schaumstoff einen Dämpfungskoeffizienten mit einem Prozentsatz von über 50 % mit einer Kompressionsenergie über 50 N mm bei einer Quetschung der anfänglichen Stärke entsprechend oder über 80 % aufweist.

2. Sitz (1) nach mindestens einem der vorangegangenen Ansprüche, bei dem der genannte viskoelastische Schaumstoff pneumatisch-viskoelastisch ist.

3. Sitz (1) nach mindestens einem der vorangegangenen Ansprüche, bei dem die genannte Kopfstütze (3) und die genannte Sitzfläche (2) so miteinander verbunden sind, dass die genannte Kontaktfläche (30) konfiguriert ist, um bei einem Schleudertrauma-Test, bei dem der genannte Sitz (1), auf dem der Dummy (100), der einen Kopf (10) definiert, sitzt, plötzlichen mittelschnellen Beschleunigungen ausgesetzt wird, Kontaktzeiten mit dem genannten Kopf (10) des genannten Dummys (100) zu erreichen, die unter 150 ms liegen.

4. Sitz (1) nach mindestens einem der vorangegangenen Ansprüche, bei dem die genannte Kontaktzeit zwischen 45 ms und 115 ms liegt.

5. Sitz (1) nach dem vorangegangenen Anspruch, bei dem die genannte Kontaktzeit zwischen 53 und 95 ms liegt.

6. Sitz (1) nach mindestens einem der vorangegangenen Ansprüche, bei dem der genannte viskoelastische Schaumstoff einen variablen Dämpfungskoeffizienten mit einem Prozentsatz von 50 % bis 80 % aufweist.

7. Sitz (1) nach mindestens einem der vorangegangenen Ansprüche, bei dem die genannte Kopfstütze (3) mindestens einen Trägerabschnitt (31) umfasst, der mit der genannten Sitzfläche (2) verbunden ist, die mindestens teilweise elastischen Schaumstoff enthält, und der genannte Kissenaufbau (32) zwischen dem genannten Trägerabschnitt (31) und der genannten Kontaktfläche (30) angebracht ist.

8. Sitz (1) nach mindestens einem der vorangegangenen Ansprüche, bei dem der genannte Kissenaufbau (32) die genannte Kontaktfläche (30) definiert und im genannten Trägerabschnitt (31) eingerahmt ist, sodass er von außen ausschließlich an der genannten Kontaktfläche (30) zugänglich ist.

9. Sitz (1) nach mindestens einem der vorangegangenen Ansprüche, bei dem die genannte Kopfstütze (3) ein Futter (34) enthält, das den genannten Kissenaufbau (32) umfasst und die genannte Kontaktfläche (30) definiert.

10. Sitz (1) nach mindestens einem der vorangegangenen Ansprüche, bei dem der genannte Kissenaufbau (32) im genannten Trägerabschnitt (31) enthalten ist und der genannte Trägerabschnitt (31) die genannte Kontaktfläche (30) definiert.

11. Sitz (1) nach mindestens einem der vorangegangenen Ansprüche, bei dem der genannte Kissenaufbau (32) eine variable Stärke zwischen 10 und 50 mm aufweist.

## Revendications

1. Siège (1) pour véhicules comprenant
- une surface d'assise (2)
- un appuie-tête (3) lié à ladite surface d'assise (2) définissant une surface de contact (30) et incluant un corps en coussin (32) au moins partiellement réalisé en matériau expansé viscoélastique,
et **caractérisé en ce que**
- ledit matériau expansé viscoélastique présente un coefficient d'amortissement en pourcentage supérieur à 50 % avec une énergie de compression supérieure à 50 N mm et un écrasement égal ou supérieur à 80 % de l'épaisseur initiale.

2. Siège (1) selon au moins une revendication précédente, dans lequel ledit matériau expansé viscoélastique est de type viscoélastique pneumatique.

3. Siège (1) selon au moins une revendication précédente, dans lequel ledit appuie-tête (3) et ladite surface d'assise (2) sont réciproquement liés de telle sorte que la surface de contact (30) est configurée pour réaliser, pendant un test de contrecoup dans lequel ledit siège (1), sur lequel est placé un mannequin (100) qui définit une tête (10), est soumis à des accélérations d'impulsion de gravité moyenne, des temps de contact avec ladite tête (10) du mannequin (100) inférieurs à 150 ms.

4. Siège (1) selon au moins une revendication précédente, dans lequel ledit temps de contact est compris entre 45 ms et 115 ms.

5. Siège (1) selon au moins une revendication précédente, dans lequel ledit temps de contact est compris entre 53 et 95 ms.

6. Siège (1) selon au moins une revendication précédente, dans lequel ledit matériau expansé viscoélastique présente un coefficient d'amortissement en pourcentage variable entre 50% et 80 %.

7. Siège (1) selon au moins une revendication précédente, dans lequel ledit appuie-tête (3) inclut au moins une portion de support (31) rattachée audit siège (2) et comprenant au moins partiellement du matériau expansé élastique et ledit corps en coussin (32) est disposé entre ladite portion de support (31) et ladite surface de contact (30).

8. Siège (1) selon au moins une revendication précédente, dans lequel ledit corps en coussin (32) définit ladite surface de contact (30) et est encadré dans ladite portion de support (31) de sorte à être accessible de l'extérieur uniquement en correspondance avec ladite surface de contact (30).

9. Siège (1) selon au moins une revendication précédente, dans lequel ledit appuie-tête (3) inclut une housse (34) contenant ledit corps en coussin (32) et définissant ladite surface de contact (30).

10. Siège (1) selon au moins une revendication précédente, dans lequel ledit corps en coussin (32) est englobé à l'intérieur de ladite portion de support (31) et ladite portion de support (31) définit la surface de contact (30).

11. Siège (1) selon au moins une revendication précédente, dans lequel ledit corps en coussin (32) présente une épaisseur variable entre 10 et 50 mm.
